# EUROPÄISCHE PATENTSCHRIFT

(11) **EP 2 823 702 B1**
(45) Veröffentlichungstag und Bekanntmachung des Hinweises auf die Patenterteilung: **13.09.2017**
(21) Anmeldenummer: 14161121.0
(22) Anmeldetag: 21.03.2014
(51) Int. Cl.: A01D 82/02

(54) **Nachzerkleinerungsvorrichtung**
Fine crushing device
Dispositif de broyage secondaire

(30) Priorität: 18.06.2013 DE 102013106296
(43) Veröffentlichungstag der Anmeldung: 14.01.2015
(73) Patentinhaber: CLAAS Saulgau GmbH, 88348 Bad Saulgau (DE)
(72) Erfinder: Bönig, Ingo, 33330 Gütersloh (DE); Laumeier, Ludger, 33397 Rietberg (DE)

(56) Entgegenhaltungen:
- EP-A1- 0 856 246
- EP-A1- 1 101 397
- DE-A1- 4 122 338
- DE-A1-102005 053 092

## Beschreibung

Die Erfindung betrifft eine Nachzerkleinerungsvorrichtung für gehäckseltes Erntegut gemäß dem Oberbegriff des Anspruchs 1.

Landwirtschaftliche Erntemaschinen wie selbstfahrende Feldhäcksler sind bei einem Einsatz in der Maisernte regelmäßig mit einer Nachzerkleinerungsvorrichtung, auch Konditioniervorrichtung oder Corn-Cracker genannt, ausgestattet. Eine solche Nachzerkleinerungsvorrichtung dient dazu, das zuvor von einem oder mehreren Bearbeitungsaggregaten, wie insbesondere einem Häckselaggregat, zerkleinerte Erntegut nochmals gezielt weiter zu zerkleinern. In der Maisernte dient dies vor allem dem Zweck, das Erntegut für den Einsatz als Viehfutter oder zur Biogaserzeugung aufzubereiten.

Aus dem Stand der Technik bekannte Nachzerkleinerungsvorrichtungen umfassen dazu üblicherweise zwei parallel zueinander angeordnete, gegeneinander vorgespannte, gegenläufig angetriebene Walzen, zwischen denen bereits gehäckseltes Erntegut hindurchgeführt wird, um im Häckselgut enthaltene (Mais-) Körner anzuschlagen, wodurch sich die Verdaulichkeit des späteren Futters für Tiere beziehungsweise die Verwendbarkeit des Ernteguts für die Biogaserzeugung verbessert.

Ganz allgemein bestehen verschiedene Anforderungen an Nachzerkleinerungsvorrichtungen. Zunächst soll eine gute Bearbeitungsqualität gewährleistet sein. Das heißt, dass insbesondere ein sicheres Aufschließen von möglichst allen im Erntegut enthaltenen Maiskörnern erreicht werden soll. Andererseits soll das Erntegut aber nicht zu einer breiartigen Masse gequetscht werden, sondern weiterhin eine grobe Struktur haben und gut verdichtbar sein. Darüber hinaus soll möglichst vermieden werden, dass einzelne Pflanzenbestandteile wie Lieschblätter die Nachzerkleinerungsvorrichtung ungekürzt passieren.

Aufgrund der hohen, stets steigenden Durchsatzleistungen von Feldhäckslern müssen auch die darin verwendeten Nachzerkleinerungsvorrichtungen zunehmend hohe

Durchsätze erreichen. Nicht zuletzt spielen daher die erzielbare Durchsatzleistung und die dazu erforderliche Antriebsleistung eine große Rolle; und es besteht aus Energieeffizienzgründen ein Bedarf, letztere möglichst gering zu halten.

So beschreibt die EP 0 525 422 A2 eine Nachzerkleinerungsvorrichtung der eingangs genannten Art, die zwei gegensinnig angetriebene Zerkleinerungswalzen aufweist, die jeweils aus mehreren, nebeneinander angeordneten keilscheibenförmigen Abschnitten bestehen, deren Grundfläche und Deckfläche stets den geleichen Durchmesser aufweisen. Die Abschnitte sind in axialer Richtung spiegelbildlich zueinander auf der jeweiligen Walze angeordnet, das heißt, dass sich einem Abschnitt mit in axialer Richtung ansteigender Umfangsfläche ein Abschnitt mit in axialer Richtung abfallender Umfangsfläche anschließt und umgekehrt. Die Anordnung der einander jeweils gegenüberliegenden Abschnitte auf den Walzen ist komplementär. Bei dieser Anordnung ist es nachteilig, dass aufbereitetes Häckselgut häufig die Ursache für Verstopfungen im nachfolgend angeordneten Auswurfsystem sein kann, was zu einer Beschränkung der Durchsatzleistung führt.

Aus der EP 1 101 397 A12 ist eine Nachzerkleinerungsvorrichtung bekannt, deren Walzen ebenfalls mit keilscheibenförmigen Abschnitten ausgeführt sind, deren Grundfläche und Deckfläche stets den geleichen Durchmesser aufweisen. Die Abschnitte sind jeweils in axialer Richtung gesehen wechselweise derart angeordnet, dass die Grundfläche eines Abschnittes stets an der Deckfläche des benachbarten Abschnittes anliegt, so dass diese Anordnung an die Form eines Tannenbaumes erinnert. Auch hier ist die Anordnung der einander gegenüberliegenden Abschnitte auf den Walzen komplementär. Nachteilig an dieser Bauform ist, dass auf Grund der spitzen Winkel der Abschnitte eine effektiv zusammenarbeitende Verzahnung nur mit hohem fertigungstechnischen Aufwand bereitzustellen ist. Ein weiterer Nachteil besteht darin, dass sich auf Grund der großen Überdeckung einander gegenüberliegender Abschnitte in radialer Richtung ein sehr großer Schneidspalt ausbildet, in welchen sich Material drücken kann, was zu einem erhöhten Leistungsbedarf für den Antrieb der Nachzerkleinerungsvorrichtung führt. Zudem führt die gewählte Ausrichtung der Anordnung der Abschnitte auf den Walzen zu einer Axialkraft, die die Lager der Nachzerkleinerungsvorrichtung zusätzliche belastet.

Aufgabe der vorliegenden Erfindung ist es, eine Nachzerkleinerungsvorrichtung bereitzustellen, die sich durch eine erhöhte Aufbereitungsqualität des Erntegutes auch bei hohem Durchsatz auszeichnet.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß dem Anspruch 1 wird vorgeschlagen, dass die auf der zumindest einen ersten Walze und der zumindest einen zweiten Walze jeweils angeordneten Abschnitte in axialer Richtung wechselweise variierende Durchmesser ihrer jeweiligen Grund- und Deckfläche aufweisen. Diese Anordnung der einzelnen Abschnitte bedingt eine Verlängerung des effektiv wirksamen Zerkleinerungsspaltes, der sich zwischen den Walzen ausbildet sowie eine vergrößerte wirksame Walzenoberfläche. Durch die Variation der Durchmesser der Grundfläche der Abschnitte ist gewährleistet, dass die Abschnitte nicht so tief ineinander eingreifen müssen wie es bei den identisch ausgeführten Bauformen der Abschnitte auf den Walzen gemäß dem eingangs zitierten Stand der Technik der Fall ist.

Vorzugsweise können zumindest zwei Arten von Abschnitten mit voneinander abweichenden Durchmessern ihrer jeweiligen Grundfläche und Deckfläche auf den Walzen angeordnet sein. Die Anzahl der Variationen von Abschnitten lässt sich somit auf eine für die Struktur der Walzen erforderliche Mindestanzahl von Gleichteilen reduzieren.

Hierbei kann auf der ersten Walze wechselweise jeweils ein Abschnitt mit in axialer Richtung abfallender Umfangsfläche neben einem Abschnitt mit in axialer Richtung ansteigender Umfangsfläche angeordnet sein, denen auf der zweiten Walze wechselweise jeweils ein Abschnitt mit in axialer Richtung ansteigender Umfangsfläche neben einem Abschnitt mit in axialer Richtung abfallender Umfangsfläche gegenüberliegen. Durch diese Anordnung der Abschnitte auf den Walzen kann eine Aufhebung der Axialkraft erreicht werden, so dass die zusätzliche Belastung der Lager der Nachzerkleinerungsvorrichtung zumindest reduziert wird.

Vorteilhafterweise können den Abschnitten auf der ersten Walze komplementär angeordnete Abschnitte auf der zweiten Walze gegenüberliegen, so dass sich zwischen den einander in radialer Richtung überlappen Stirnflächen der einander gegenüberliegenden Abschnitte jeweils ein Scherspalt ausbildet. Durch diese Maßnahme wird somit erreicht, dass neben den zur Rotationsachse schrägen Zerkleinerungsspalten weiterhin in radialer Ebene verlaufende Scherspalte zur Zerkleinerung des Ernteguts dienen. Jeder Abschnitt einer Walze weist einen Scherspalt bildende Stirnflächen auf, so dass über die axiale Breite der Walzen gesehen in regelmäßigen Abständen ein zuverlässiges und energiesparendes Schneiden von im Erntegut enthaltenen längeren Pflanzenbestandteilen wie beispielsweise Lieschblättern gewährleistet ist. Der Anteil von Überlängen im Erntegut wird so sicher reduziert.

Dabei kann sich der jeweilige Scherspalt zwischen der Grundfläche eines Abschnittes auf der ersten Walze und der Deckfläche eines Abschnittes auf der zweiten Walze ausbilden. Dies kann dadurch erreicht werden, dass die Scherspalte von in radialer Richtung der Walze außen liegenden Teilbereichen der Grundfläche und der Deckfläche eines jeweiligen Abschnittes der ersten Walze mit den außen liegenden Teilbereichen der Grundfläche und der Deckfläche eines jeweiligen in axialer Richtung versetzt hierzu angeordneten Abschnittes der zweiten Walze gebildet werden.

Der besondere Vorteil besteht auf Grund der Anordnung der Abschnitte darin, dass der jeweilige Scherspalt in radialer Richtung eine geringe Tiefe aufweist, die durch das Verhältnis der komplementär gegenüberliegenden Abschnitte mit unterschiedlichen Durchmessern der Grundfläche bestimmt wird. Das Eindringen von Material in den Schneidspalt kann auf diese Weise zumindest reduziert werden und somit auch der Energiebedarf.

Des Weiteren können die Umfangsflächen wenigstens einiger der Abschnitte zumindest bereichsweise eine Profilierung, insbesondere eine Verzahnung, Rändelung, Spiralnut oder dergleichen, oder eine Kombination von Profilierungen aufweisen.

Insbesondere kann die Profilierung als Kegelverzahnung ausgeführt sein. Durch die Variation der Durchmesser der Grundflächen der Abschnitte kann eine Kegelverzahnung auf den Umfangsflächen der Abschnitte realisiert werden, wobei ein Abschnitt mit großem Durchmesser der Grundfläche eine von der Grundfläche ausgehende grobe Verzahnung hin zu einer mittleren Verzahnung an der Deckfläche aufweist, während ein Abschnitt mit kleinem Durchmesser der Grundfläche eine von der Grundfläche ausgehende mittlere Verzahnung hin zu einer feinen Verzahnung an der Deckfläche aufweist. Diese Kombination der Verzahnung auf den Umfangsflächen der Abschnitte auf den Walzen hat sich hinsichtlich Gutannahme und Gutaufbereitung als besonders effektiv erwiesen.

Hierbei kann die Kegelverzahnung eine konstante Zahndicke aufweisen. Auf Grund der konstanten Zahndicke variiert die Weite und Tiefe der Zahnlücken zueinander benachbarter Zähne, wodurch sich auf der jeweiligen Umfangsfläche eines Abschnittes in dessen axialer Richtung unterschiedliche Verzahnungen ergeben, dass heißt Verzahnungen mit gröberen und feineren Bereichen. Hieraus resultiert der Vorteil, dass sich auf der Umfangsfläche scharfe Schneiden ausbilden, jedoch keine stumpfen Bereiche, die die Gutannahme verschlechtern könnten.

In vorteilhafter Weiterbildung kann ein Abschnitt mit größerem Durchmesser der Grundfläche eine gröbere Verzahnung aufweisen als ein diesem komplementär gegenüberliegender Abschnitt mit kleinerem Durchmesser der Grundfläche. Die Anordnung der Grobverzahnung auf den Abschnitten mit großem Durchmesser der Grundfläche führt dazu, dass das Erntegut zunächst mit diesem Abschnitt in Berührung kommt, wodurch die Gutannahme verbessert wird, während durch die feinere Verzahnung auf dem Abschnitt mit kleinerem Durchmesser der Grundfläche ein zuverlässigeres Aufschließen von Körnern im Erntegut erreicht wird.

Vorzugsweise können die Walzen segmentiert aufgebaut sein, indem die jeweiligen Abschnitte der ersten und der zweiten Walze jeweils als einzelne ringförmige Scheiben ausgeführt sind, die in sich wiederholender Abfolge auf einen zylindrischen Grundkörper axial aufbringbar sind. Hierdurch kann eine kostengünstige Herstellung erreicht werden, indem die Abschnitte einer Walze an Ringkörpern ausgebildet sind, die in sich wiederholender Abfolge auf einem zylindrischen Grundkörper axial aufgebracht sind. Eine geeignete Sicherung der Ringkörper auf dem Grundkörper, beispielsweise mittels Passfeder und/oder eine axiale Einspannung, ist dabei zweckmäßig. Der segmentierte Walzenaufbau ermöglicht den einfachen, auch nachträglichen Austausch einzelner Elemente, zum Beispiel bei Verschleiß.

Zur Erzielung eines besonders geringen Gesamtgewichts der Vorrichtung kann der Grundkörper, auf den die Ringkörper aufgeschoben sind, als Hohlkörper gefertigt sein.

Weiterhin betrifft die vorliegende Erfindung eine landwirtschaftliche Erntemaschine zur Bearbeitung und Förderung von Erntegut, insbesondere selbstfahrender Feldhäcksler, mit einer einem Gutbearbeitungsaggregat nachgelagerten erfindungsgemäßen Nachzerkleinerungsvorrichtung, wie sie weiter oben beschrieben ist.

Die vorliegende Erfindung wird nachstehend anhand eines in den Zeichnungen dargestellten Ausführungsbeispieles näher erläutert.

Es zeigen:
- Fig. 1: einen landwirtschaftliche Erntemaschine in schematischer Seitenansicht;
- Fig. 2: eine Nachzerkleinerungsvorrichtung in einer Ansicht von schräg vorne;
- Fig. 3: die Nachzerkleinerungsvorrichtung gemäß Fig. 2 in einer Teilansicht von oben;
- Fig. 4: eine Detailansicht IV gemäß Fig. 3.

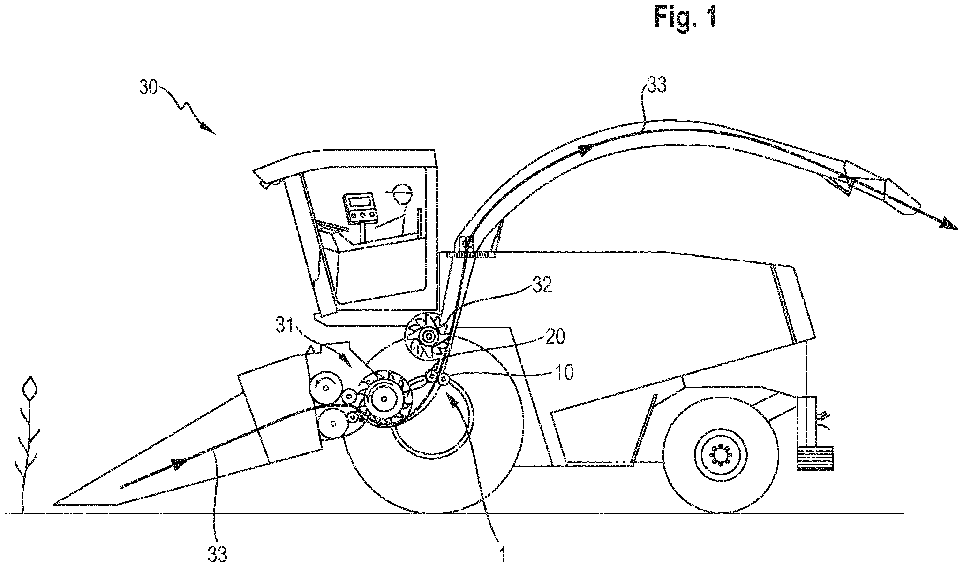

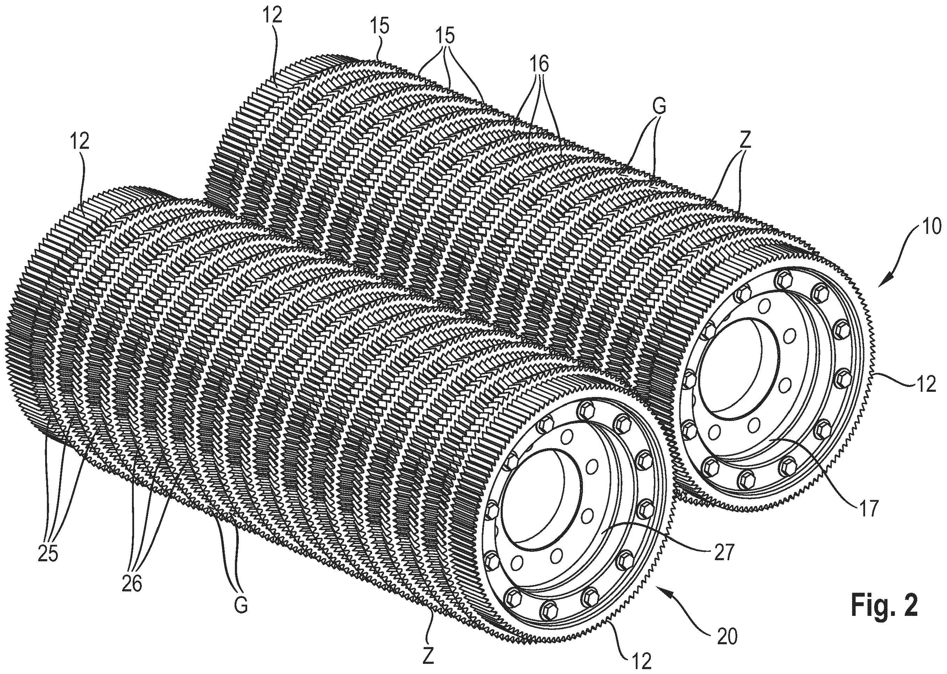

In Fig. 1 ist beispielhaft eine landwirtschaftliche Erntemaschine in Form eines selbstfahrenden Feldhäckslers 30 in schematischer Seitenansicht dargestellt. Der Feldhäcksler 30 ist auf für sich bekannte Weise (daher nicht näher bezeichnet) mit Vorder- und Hinterrädern sowie einem (unter anderem) diese antreibenden Hauptantriebsmotor ausgestattet, um zur Ernte von Pflanzenbestand über ein Feld zu fahren. Mittels eines frontseitig angebauten Erntevorsatzes wird der Pflanzenbestand in die Maschine aufgenommen, um anschließend in Form eines Stroms von Erntegut 33 (angedeutet durch eine durchgehende mit Pfeilen versehene Linie durch den Feldhäcksler 30) von verschiedenen Förder- und/oder Verarbeitungsaggregaten durch den Feldhäcksler 30 gefördert und dabei bearbeitet, insbesondere zerkleinert zu werden. Dabei nehmen paarweise angeordnete, rotierende Einzugswalzen eine Vorpressung des Ernteguts 33 vor, damit das Erntegut 33 beim Durchlaufen eines nachgelagerten Häckselaggregats 31 unter Zusammenwirkung einer rotierenden, mit Messern besetzten Häckseltrommel und einer Gegenschneide in kleine Partikel gehäckselt wird. Durch einen hinter der Häckseltrommel aufsteigenden Förderschacht gelangt das so gehäckselte Erntegut 33 in den Wirkungsbereich einer Nachzerkleinerungsvorrichtung 1. Diese umfasst im Wesentlichen zwei gegenläufig rotierend angetriebene, gegeneinander vorgespannte Walzen 10, 20 mit zueinander parallelen Rotationsachsen. Dabei wird Erntegut 33, das einen zwischen den Walzen 10, 20 gebildeten Durchgang (der Drehsinn jeder Walze 10, 20 begünstigt dabei die Gutstromrichtung) passiert, unter dem mechanischen Einfluss der Walzenoberflächen auf anhand der Fig. 2 bis 4 noch näher zu erläuternde Weise aufbereitet. Diese weitere Aufbereitung dient insbesondere bei der Ernte von Mais dem Zweck, im gehäckselten Erntegut 33 vorhandene Maiskörner aufzuschließen, wodurch sich die Verdaulichkeit des späteren Futters für Tiere oder die Verwendbarkeit des Ernteguts für die Biogaserzeugung verbessert.

Nach Passieren der Nachzerkleinerungsvorrichtung 1 gelangt das Erntegut 33 schließlich in den Wirkungsbereich eines Auswurfbeschleunigers 32, welcher das Erntegut 33 vor dem Eintritt in einen Auswurfkrümmer nochmals beschleunigt, um eine sichere Förderung durch den Auswurfkrümmer und anschließend einen sicheren Auswurf zum Zweck der Überladung auf zum Beispiel ein Transportfahrzeug zu gewährleisten.

In den Fig. 2 bis 4 wird ein bevorzugtes Ausführungsbeispiel einer Nachzerkleinerungsvorrichtung 1 beschrieben, welche vorteilhaft in den Feldhäcksler 30 gemäß Fig. 1 eingebaut ist.

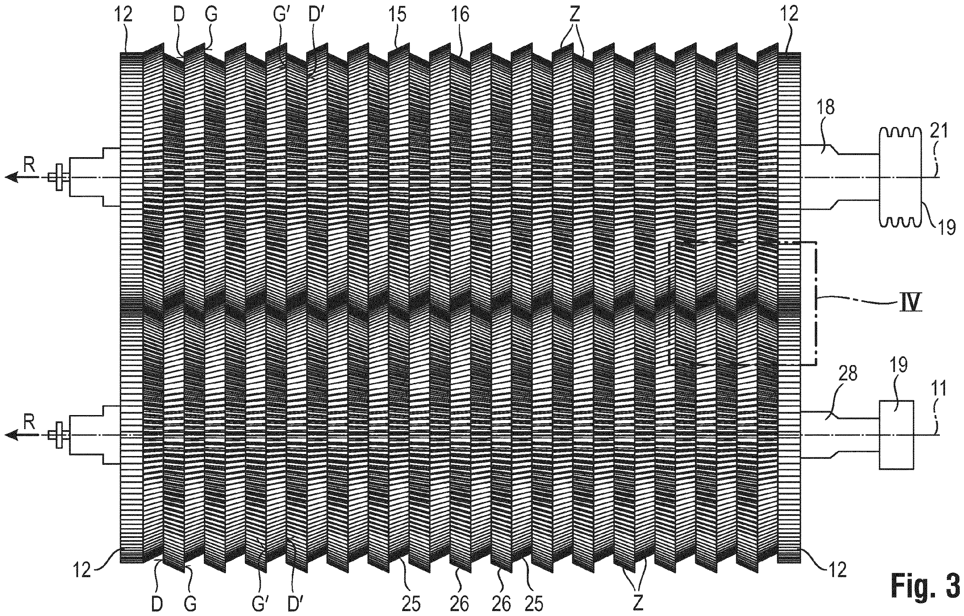

Demnach zeigt Fig. 2 eine erfindungsgemäße Nachzerkleinerungsvorrichtung 1 in einer Ansicht von schräg vorne. Im Wesentlichen umfasst die Nachzerkleinerungsvorrichtung 1 zwei Walzen 10, 20 mit zueinander parallelen Rotationsachsen 11, 21. Die Walzen 10, 20 sind jeweils auf einer Welle 18, 28 befestigt, welche an beiden axialen Enden der Walzen 10, 20 aus deren Walzenkörper heraustritt, wie in Fig. 3 dargestellt ist. Mittels der Wellen 18, 28 lassen sich die Walzen 10, 20 jeweils drehbar gegenüber einem (aus Übersichtsgründen nicht gezeigten) gemeinsamen Gehäuse der Nachzerkleinerungsvorrichtung 1 lagern.

Zum Antrieb der Walzen 10, 20 ist an jeweils einem langen Ende der jeweiligen Welle 18, 28 eine Riemenscheibe 19 angebracht. Durch entsprechende Umschlingung der Riemenscheiben 19 von einem Antriebsriemen lassen sich die Walzen 10, 20 in gegenläufige Drehung versetzen, wobei die Richtung der Umfangsgeschwindigkeiten der Walzen 10, 20 im Eingriffsbereich der Walzen 10, 20 der Förderrichtung des Ernteguts 33 (vgl. Fig. 1) entspricht.

Aus der Ansicht gemäß Fig. 2 geht hervor, dass die Walzen 10, 20 segmentiert aufgebaut sind. Insbesondere wird die Mantelfläche jeder Walze 10, 20 aus einer Vielzahl von kegelscheibenförmigen Abschnitten 15, 16; 25, 26 gebildet, die in sich wiederholender Abfolge auf einem zylindrischen Grundkörper 17, 27 axial aufgebracht sind. Jeder Abschnitt 15, 16; 25, 26 weist eine Grundfläche G, G' und eine Deckfläche D, D' auf, mit der die jeweiligen Abschnitte 15, 16; 25, 26 der Walzen 10, 20 aneinander liegen. Der Durchmesser der Grundfläche G, G' eines jeden Abschnittes 15, 16; 25, 26 ist größer als der Durchmesser der korrespondierenden Deckfläche D, D', so dass jeder Abschnitt 15, 16; 25, 26 eine gegenüber der jeweiligen Rotationsachse 11, 21 der zugehörigen Walze 10, 20 schräg verlaufende Umfangsfläche 2 aufweist. Der Grundkörper 17, 27 ist als Hohlkörper gefertigt, wodurch sich bei hinreichender Festigkeit ein verhältnismäßig geringes Gesamtgewicht jeder Walze 10, 20 ergibt. Alternativ könnte auch ein massiver Grundkörper vorgesehen sein.

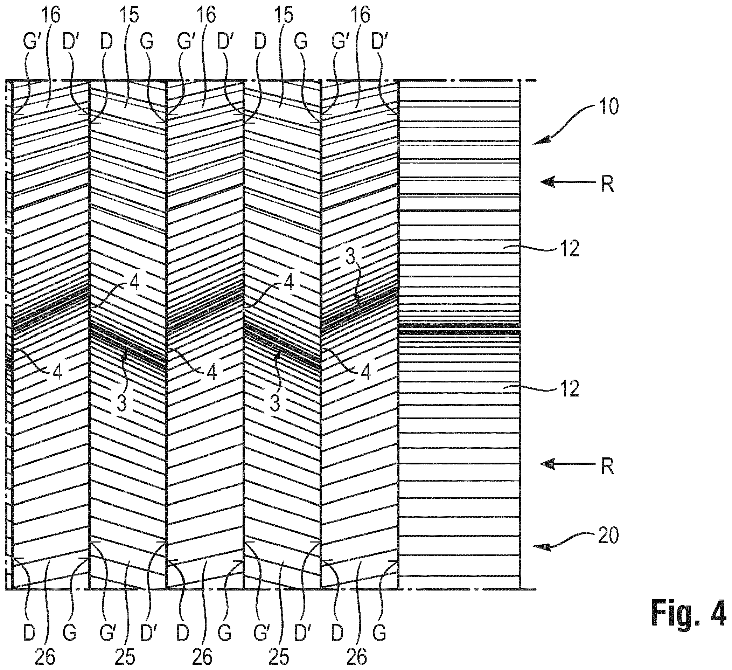

Auf der Walze 10 wechseln sich die Abschnitte 15, 16 in ihrer Anordnung nebeneinander axialer Richtung R ab, während sich auf der Walze 20 die Abschnitte 25, 26 in axialer Richtung R abwechseln. Im radialen Außenbereich, das heißt auf der Umfangsfläche 2, ist jeder Abschnitt 15,16; 25, 26 mit einer Verzahnung Z, insbesondere einer Kegelverzahnung, versehen (siehe auch Fig. 3, 4).

Die Darstellung in Fig. 3 zeigt die Nachzerkleinerungsvorrichtung 1 gemäß Fig. 2 in einer Ansicht von oben. Aus dieser Ansicht wird die Struktur der Walzen 10, 20 deutlicher erkennbar. Endseitig werden die Walzen 10, 20 von jeweils auf den Grundkörpern 17, 27 angeordneten Ringscheiben 12 begrenzt, zwischen denen die jeweiligen Abschnitte 15, 16; 25, 26 der Walzen 10, 20 angeordnet sind. Auf der Walze 10 sind, in axialer Richtung von links nach rechts gesehen, die Abschnitte 15, 16 wechselweise nebeneinander angeordnet. Die Anordnung der Abschnitte 15, 16 zueinander ist derart gewählt, dass an der Grundfläche G eines Abschnittes 15 die Grundfläche G' eines Abschnittes 16 anliegt. Entsprechend liegen sich die Deckflächen D, D' zweier benachbarter Abschnitte 15, 16 gegenüber. Wie aus der Darstellung in Fig. 3 weiterhin ersichtlich ist, ist der Durchmesser der Grundfläche G des Abschnittes 15 größer als der Durchmesser der Grundfläche G' des benachbarten Abschnittes 16. Gleiches gilt für die Deckflächen D, D' zueinander benachbart angeordneter Abschnitte 15, 16. Somit ist auf der ersten Walze 10 wechselweise jeweils ein Abschnitt 15 mit in axialer Richtung R der Walze 10 ansteigender Umfangsfläche 2 neben einem Abschnitt 16 mit in axialer Richtung R der Walze 10 abfallender Umfangsfläche 2 angeordnet.

Die Walze 20 ist komplementär zu der achsparallel angeordneten Walze 10 aufgebaut. Die Anordnung der Abschnitte 25, 26 zueinander ist derart gewählt, dass an der Deckfläche D eines Abschnittes 25 die Deckfläche D' eines Abschnittes 26 anliegt. Entsprechend liegen sich die Grundflächen G, G' zweier benachbarter Abschnitte 25, 26 gegenüber. Wie aus der Darstellung in Fig. 3 weiterhin ersichtlich ist, ist der Durchmesser der Deckfläche D des Abschnittes 25 kleiner als der Durchmesser der Deckfläche D' des benachbarten Abschnittes 26. Gleiches gilt für die Grundflächen G, G' zueinander benachbart angeordneter Abschnitte 15, 16. Hingegen ist auf der zweiten Walze 20 wechselweise jeweils ein Abschnitt 25 mit in axialer Richtung R der Walze abfallender Umfangsfläche 2 neben einem Abschnitt 26 mit in axialer Richtung R der Walze ansteigender Umfangsfläche angeordnet. Auf Grund dieser wechselseitigen Anordnung von Abschnitten 15, 16; 25, 26 in axialer Richtung der jeweiligen Walze 10, 20 sowie in radialer Richtung der einander gegenüberliegenden Walzen 10, 20 bildet sich in den Bereichen einander in radialer Richtung überlappender Grundflächen G und Deckflächen D der in axialer Richtung der jeweiligen Walze 10, 20 versetzt zueinander und gegenüberliegend angeordneten Abschnitte 15, 26 jeweils ein Scherspalt 4 aus. Durch diese Scherspalte 4 wird eintretendes Erntegut 33 in diesen Bereichen auf besonders kraft- und energiesparende Weise geschnitten. Insbesondere werden durch diese Maßnahme im Erntegut 33 enthaltene Bestandteile mit Überlänge (zum Beispiel Lieschblätter) sicher erfasst und zerkleinert.

Zwischen den jeweils einander komplementär gegenüberliegenden Abschnitten 15, 25 beziehungsweise 16, 26 bilden sich zwischen den geneigten Umfangsflächen 2 Zerkleinerungsspalte 3 aus, die auf Grund des schrägen Verlaufs der Umfangsflächen 2 eine erhöhte Zerkleinerungswirkung aufweisen. Die gebildeten Zerkleinerungsspalte 3 sind derart bemessen, dass diese kleiner als im Erntegut 33 enthaltene Maiskörner sind, um so ein sicheres Aufschließen der Körner zu erreichen.

Um die sichere Ausbildung eines Zerkleinerungspaltes 3 zwischen zwei einander komplementär gegenüberliegenden Abschnitten 15, 25 beziehungsweise 16, 26 zu gewährleisten, werden die Abschnitte 15, 26 sowie die Abschnitte 16, 25 jeweils als Gleichteile ausgeführt. Zur Herstellung der Abschnitte 15, 26 beziehungsweise 16, 25 sind Fertigungstoleranzen vorgegeben, wonach die Abschnitte 15, 26, die eine größere Grundfläche G aufweisen als die Anschnitte 16, 25, hinsichtlich ihres Außendurchmessers mit einer negativen Toleranz hergestellt werden, während die Abschnitte 16, 25 hinsichtlich ihres Außendurchmessers mit einer positiven Toleranz ausgeführt werden.

Die Darstellung in Fig. 4 zeigt eine Detailansicht VI gemäß Fig. 3. Aus dieser Darstellung ist die Ausgestaltung der Walzen 10, 20 noch klarer ersichtlich. Auf der Walze 10 ist unmittelbar benachbart zu der Ringscheibe 12 ein Abschnitt 16 angeordnet, dessen Deckfläche D' der Ringscheibe 12 zugewandt ist. An die Grundfläche G' dieses Abschnittes 16 schließt sich der Abschnitt 15 mit seiner Grundfläche G an. Diesem folgt wiederum ein Abschnitte 16, der mit seiner Deckfläche D' an der Deckfläche D des diesem Abschnitt 16 vorangehenden Abschnittes 15 anliegt. Diese Struktur setzt sich wechselweise in axialer Richtung R der Walze 10 fort.

Die Struktur der Walze 20 ist komplementär zu der der Walze 10. Auf der Walze 20 ist benachbart zu der Ringscheibe 12 ein Abschnitt 26 angeordnet, dessen Deckfläche G der Ringscheibe 12 zugewandt ist. An die Deckfläche D des zur Ringscheibe 12 unmittelbar benachbarten Abschnittes 26 schließt sich der Abschnitt 25 mit seiner Deckfläche D' an. Diesem folgt wiederum ein Abschnitte 26, der mit seiner Grundfläche G an der Grundfläche G' eines zu diesem Abschnitt 26 benachbarten Abschnittes 25 anliegt. Der jeweilige Zerkleinerungspalt 3 bildet sich jeweils zwischen den geneigten Umfangsflächen 2 einander gegenüberliegender Abschnittspaarungen 15, 25; 16, 26 der Walzen 10, 20 aus. Der jeweilige Scherspalt 4 bildet sich zwischen den einander in radialer Richtung überlappenden Bereichen der Grundflächen G der in axialer Richtung R benachbarten Abschnitte 15, 26 aus. Die Tiefe des jeweiligen Scherspaltes 4 ist gegenüber dem aus der EP 1 101 397 A1 bekannten Aufbau einer Nachzerkleinerungsvorrichtung erheblich geringer, was sich bei der Leistungsaufnahme der Nachzerkleinerungsvorrichtung 1 vorteilhaft auswirkt, da sich weniger Material in die Scherspalte 4 drücken kann.

Ein weiterer Aspekt ist die Ausgestaltung der Verzahnung Z auf den Umfangsflächen 2 der jeweiligen Abschnitte 15, 16; 25, 26. Die Abschnitte 15, 26 sind wie die Abschnitte 16, 25 als Gleichteile ausgeführt, was den Herstellaufwand und die Herstellkosten reduziert. Die als Kegelverzahnung ausgeführten Verzahnungen Z der Abschnitte 15, 26 weisen eine von der Grundfläche G ausgehende grobe Verzahnung hin zu einer mittleren Verzahnung an der Deckfläche D auf, während die Abschnitte 16, 25 eine von der Grundfläche G' ausgehende mittlere Verzahnung hin zu einer feinen Verzahnung an der Deckfläche D' aufweisen. Entsprechend der weiter oben beschriebenen Anordnung der einander gegenüberliegenden Abschnitte 15, 25; 16, 26 der Walzen 10, 20 resultiert hieraus eine Kombination aus einer Grob- und Feinverzahnung der einander gegenüberliegenden Abschnitte 15, 25; 16; 26, welche sich als besonders vorteilhaft bei der Gutannahme und der Gutaufbereitung erwiesen hat. Insbesondere da die Abschnitte 15, 26, deren Grundfläche G einen größeren Durchmesser aufweist als die Grundfläche G' der Abschnitte 16, 25, mit der Grobverzahnung versehen sind, tritt das Erntegut 33 zuerst mit diesem Bereich der Abschnitte 15, 26 in Kontakt, wodurch die Gutannahme weiter begünstigt wird.

### Bezugszeichenliste

- **1**: Nachzerkleinerungsvorrichtung
- **2**: Umfangsfläche
- **3**: Zerkleinerungsspalt
- **4**: Scherspalt

- 10: Walze
- 11: Rotationsachse
- **12**: Ringscheibe

- **15**: Abschnitt
- **16**: Abschnitt
- **17**: Grundkörper
- **18**: Welle
- **19**: Riemenscheibe
- **20**: Walze
- **21**: Rotationsachse

- **25**: Abschnitt
- **26**: Abschnitt
- **27**: Grundkörper
- **28**: Welle

- **30**: Feldhäcksler
- **31**: Häckselaggregat
- **32**: Auswurfbeschleuniger
- **33**: Erntegut
- **D, D'**: Deckfläche
- **G, G'**: Grundfläche
- **R**: Richtung
- **Z**: Verzahnung

## Patentansprüche

1. Nachzerkleinerungsvorrichtung (1) für gehäckseltes Erntegut (E) mit zumindest einer ersten und einer zweiten Walze (10, 20) mit achsparallel verlaufenden Rotationsachsen (11, 21), deren einander gegenüberliegenden Umfangsflächen einen Zerkleinerungsspalt (3) begrenzen, wobei jede der ersten und der zweiten Walzen (10, 20) jeweils kegelstumpfförmige, eine Grundfläche (G,G') und eine Deckfläche (D, D') aufweisende Abschnitte (15, 16; 25, 26), die mit zur Rotationsachse (11, 21) der jeweiligen Walze (10, 20) schräg verlaufenden Umfangsflächen (2) versehen sind, aufweist, **dadurch gekennzeichnet, dass** die auf der zumindest einen ersten Walze (10) und der zumindest einen zweiten Walze (20) jeweils angeordneten Abschnitte (15, 16; 25, 26) in axialer Richtung (R) gesehen wechselweise variierende Durchmesser ihrer jeweiligen Grundfläche (G, G') und Deckfläche (D; D') aufweisen.

2. Nachzerkleinerungsvorrichtung (1) nach Anspruch 1, **dadurch gekennzeichnet, dass** zumindest zwei Abschnitte (15, 16; 25, 26) mit voneinander abweichenden Durchmessern ihrer jeweiligen Grundfläche (G, G') und Deckfläche (D, D') auf den Walzen (10, 20) angeordnet sind.

3. Nachzerkleinerungsvorrichtung (1) nach einem der Ansprüche 1 oder 2, **dadurch gekennzeichnet, dass** auf der ersten Walze (10) wechselweise jeweils ein Abschnitt (15) mit in axialer Richtung (R) ansteigender Umfangsfläche (2) neben einem Abschnitt (16) mit in axialer Richtung (R) abfallender Umfangsfläche (2) angeordnet ist, denen auf der zweiten Walze (20) wechselweise jeweils ein Abschnitt (25) mit in axialer Richtung (R) abfallender Umfangsfläche (2) neben einem Abschnitt (26) mit in axialer Richtung (R) ansteigender Umfangsfläche (2) gegenüberliegen.

4. Nachzerkleinerungsvorrichtung (1) nach einem der Ansprüche 1 oder 2, **dadurch gekennzeichnet, dass** den Abschnitten (15, 16) auf der ersten Walze (10) komplementär angeordnete Abschnitte (25, 26) auf der zweiten Walze (20) gegenüberliegen, so dass sich zwischen den einander in radialer Richtung überlappenden Bereichen der Grundflächen G der in axialer Richtung (R) benachbarten Abschnitte 15, 26 ausbilden.

5. Nachzerkleinerungsvorrichtung (1) nach Anspruch 3, **dadurch gekennzeichnet, dass** sich der jeweilige Scherspalt (4) zwischen der Grundfläche (G) eines Abschnittes (15) auf der ersten Walze (10) und der Deckfläche (D) eines Abschnittes (26) auf der zweiten Walze (20) ausbildet.

6. Nachzerkleinerungsvorrichtung (1) nach einem der Ansprüche 1 bis 4, **dadurch gekennzeichnet, dass** die Umfangsflächen (2) wenigstens einiger der Abschnitte (15, 16; 25, 26) zumindest bereichsweise eine Profilierung, insbesondere eine Verzahnung (Z), Rändelung, Spiralnut oder dergleichen, oder eine Kombination von Profilierungen aufweisen.

7. Nachzerkleinerungsvorrichtung (1) nach Anspruch 6, **dadurch gekennzeichnet, dass** die Profilierung als Kegelverzahnung ausgeführt ist.

8. Nachzerkleinerungsvorrichtung (1) nach Anspruch 7, **dadurch gekennzeichnet, dass** die Kegelverzahnung eine konstante Zahndicke aufweist.

9. Nachzerkleinerungsvorrichtung (1) nach einem der Ansprüche 6 bis 8, **dadurch gekennzeichnet, dass** ein Abschnitt (15, 26) mit größerem Durchmesser der Grundfläche (G) eine gröbere Profilierung aufweist als ein diesem komplementär gegenüberliegender Abschnitt (25, 16) mit kleinerem Durchmesser der Grundfläche (G).

10. Nachzerkleinerungsvorrichtung (1) nach einem der Ansprüche 1 bis 9, **dadurch gekennzeichnet, dass** die Walzen (10, 20) segmentiert aufgebaut sind, indem die jeweiligen Abschnitte (15, 16; 25, 26) der ersten und der zweiten Walze (10, 20) jeweils als einzelne ringförmige Scheiben ausgeführt sind, die in sich wiederholender Abfolge auf einen zylindrischen Grundkörper (17, 27) axial aufbringbar sind.

11. Nachzerkleinerungsvorrichtung (1) nach Anspruch 10, **dadurch gekennzeichnet, dass** der Grundkörper (17, 27) als Hohlkörper gefertigt ist.

12. Nachzerkleinerungsvorrichtung (1) nach einem der Ansprüche 1 bis 11, **dadurch gekennzeichnet, dass** zwischen den Abschnitten (15, 16; 25, 26) Ringkörper mit einer zur Rotationsachse (11, 21) der Walze (10, 20) parallel verlaufenden Umfangsfläche (2) angeordnet sind.

13. Landwirtschaftliche Erntemaschine zur Bearbeitung und Förderung von Erntegut (E), insbesondere selbstfahrender Feldhäcksler (30), mit einer einem Gutbearbeitungsaggregat (31) nachgelagerten Nachzerkleinerungsvorrichtung (1) nach einem der vorherigen Ansprüche.

## Claims

1. A post-comminuting apparatus (1) for chopped crop material (E) comprising at least a first and a second roller (10, 20) having axes of rotation (11, 21) extending in axis-parallel relationship, whose mutually opposite peripheral surfaces define a comminuting gap (3), wherein each of the first and second rollers (10, 20) respectively has frustoconical portions (15, 16; 25, 26) which have a base surface (G, G') and a top surface (D, D') and which are provided with peripheral surfaces (2) extending inclinedly relative to the axis of rotation (11, 21) of the respective roller (10, 20), **characterised in that** the portions (15, 16; 25, 26) respectively arranged on the at least one first roller (10) and the at least one second roller (20) have alternately varying diameters as viewed in the axial direction (R) of their respective base surface (G, G') and top surface (D; D').

2. A post-comminuting apparatus (1) according to claim 1 **characterised in that** at least two portions (15, 16; 25, 26) having mutually differing diameters of their respective base surface (G, G') and top surface (D, D') are arranged on the rollers (10, 20).

3. A post-comminuting apparatus (1) according to one of claims 1 and 2 **characterised in that** arranged alternately on the first roller (10) is a respective portion (15) with a peripheral surface (2) rising in the axial direction (R) beside a portion (16) with a peripheral surface (2) falling in the axial direction (5), and disposed in opposite relationship thereto alternately on the second roller (20) is a respective portion (25) with a peripheral surface (2) falling in the axial direction (R) beside a portion (26) with a peripheral surface (2) rising in the axial direction (R).

4. A post-comminuting apparatus (1) according to one of claims 1 and 2 **characterised in that** disposed opposite the portions (15, 16) on the first roller (10) are complementarily arranged portions (25, 26) on the second roller (20) so that a shear gap is formed between the regions, overlapping each other in the radial direction, of the base surfaces (G) of the portions (15, 26) which are adjacent in the axial direction (R).

5. A post-comminuting apparatus (1) according to claim 3 **characterised in that** the respective shear gap (4) is formed between the base surface (G) of a portion (15) on the first roller (10) and the top surface (D) of a portion (26) on the second roller (20).

6. A post-comminuting apparatus (1) according to one of claims 1 to 4 **characterised in that** the peripheral surfaces (2) of at least some of the portions (15, 16; 25, 26) at least region-wise have a profiling, in particular a tooth configuration (Z), knurling, spiral groove or the like, or a combination of profilings.

7. A post-comminuting apparatus (1) according to claim 6 **characterised in that** the profiling is in the form of a conical tooth configuration.

8. A post-comminuting apparatus (1) according to claim 7 **characterised in that** the conical tooth configuration has a constant tooth thickness.

9. A post-comminuting apparatus (1) according to one of claims 6 to 8 **characterised in that** a portion (15, 16) having a larger diameter of the base surface (G) has a coarser profiling than a portion (25, 16) in opposite complementary relationship thereto with a smaller diameter of the base surface (G).

10. A post-comminuting apparatus (1) according to one of claims 1 to 9 **characterised in that** the rollers (10, 20) are of a segmented structure by the respective portions (15, 16; 25, 26) of the first and second rollers (10, 20) respectively being in the form of individual annular discs which can be axially mounted in a repetitive sequence on a cylindrical base body (17, 27).

11. A post-comminuting apparatus (1) according to claim 10 **characterised in that** the base body is produced as a hollow body.

12. A post-comminuting apparatus (1) according to one of claims 1 to 11 **characterised in that** annular bodies having a peripheral surface (2) extending parallel to the axis of rotation (11, 21) of the roller (10, 20) are arranged between the portions (15, 16; 25, 26).

13. An agricultural harvester for processing and conveying crop material (E), in particular a self-propelled forage harvester (30), comprising a post-comminuting apparatus (1) according to one of the preceding claims arranged downstream of a crop processing assembly (31).

## Revendications

1. Dispositif de broyage secondaire (1) pour du produit de récolte haché (E), comprenant au moins un premier et un deuxième rouleau (10, 20) avec des axes de rotation (11, 21) à axes parallèles, dont les surfaces périphériques en vis-à-vis délimitent un interstice de broyage (3), chacun des premiers et deuxièmes rouleaux (10, 20) comportant des portions tronconiques (15, 16 ; 25, 26) qui présentent une surface de base (G, G') et une surface supérieure (D, D') et qui sont pourvues de surfaces périphériques (2) s'étendant en biais par rapport à l'axe de rotation (11, 21) du rouleau (10, 20) concerné, **caractérisé en ce que** les portions (15, 16 ; 25, 26) disposées respectivement sur le au moins un premier rouleau (10) et sur le au moins un deuxième rouleau (20) présentent des diamètres de leur surface de base (G, G') respective et de leur surface supérieure (D ; D') respective qui, vus dans la direction axiale (R), varient alternativement.

2. Dispositif de broyage secondaire (1) selon la revendication 1, **caractérisé en ce qu'**au moins deux portions (15, 16 ; 25, 26) avec des diamètres différents de leur surface de base (G, G') respective et de leur surface supérieure (D, D') respective sont disposées sur les rouleaux (10, 20).

3. Dispositif de broyage secondaire (1) selon une des revendications 1 ou 2, **caractérisé en ce que** sur le premier rouleau (10) est disposée alternativement une portion (15) avec une surface périphérique (2) ascendante dans la direction axiale (R) à côté d'une portion (16) avec une surface périphérique (2) descendante dans la direction axiale (R), en vis-à-vis desquelles se trouvent alternativement, sur le deuxième rouleau (20), une portion (25) avec une surface périphérique (2) descendante dans la direction axiale (R) à côté d'une portion (26) avec une surface périphérique (2) ascendante dans la direction axiale (R).

4. Dispositif de broyage secondaire (1) selon une des revendications 1 ou 2, **caractérisé en ce qu'**aux portions (15, 16) sur le premier rouleau (10) font face des portions (25, 26) disposées de manière complémentaire sur le deuxième rouleau (20), de façon qu'entre les zones, en chevauchement mutuel dans la direction axiale, des surfaces de base (G) des portions 15, 26 voisines dans la direction axiale (R)

5. Dispositif de broyage secondaire (1) selon la revendication 3, **caractérisé en ce que** l'interstice de cisaillement (4) respectif est formé entre la surface de base (G) d'une portion (15) sur le premier rouleau (10) et la surface supérieure (D) d'une portion (26) sur le deuxième rouleau (20).

6. Dispositif de broyage secondaire (1) selon une des revendications 1 à 4, **caractérisé en ce que** les surfaces périphériques (2) d'au moins certaines des portions (15, 16 ; 25, 26) comportent au moins par endroits un profilage, en particulier une denture (Z), un moletage, une rainure hélicoïdale ou analogue, ou une combinaison de profilages.

7. Dispositif de broyage secondaire (1) selon la revendication 6, **caractérisé en ce que** le profilage est conformé en denture conique.

8. Dispositif de broyage secondaire (1) selon la revendication 7, **caractérisé en ce que** la denture conique présente une épaisseur de dent constante.

9. Dispositif de broyage secondaire (1) selon une des revendications 6 à 8, **caractérisé en ce qu'**une portion (15, 26) de plus grand diamètre de la surface de base (G) présente un profilage plus grossier qu'une portion (25, 16), située en vis-à-vis de manière complémentaire, de plus petit diamètre de la surface de base (G).

10. Dispositif de broyage secondaire (1) selon une des revendications 1 à 9, **caractérisé en ce que** les rouleaux (10, 20) sont conçus de manière segmentée par le fait que les portions (15, 16 ; 25, 26) respectives du premier et du deuxième rouleau (10, 20) sont conformées chacune en disques annulaires individuels qui peuvent être montés axialement en juxtaposition répétitive sur un corps de base cylindrique (17, 27).

11. Dispositif de broyage secondaire (1) selon la revendication 10, **caractérisé en ce que** le corps de base (17, 27) est réalisé sous la forme d'un corps creux.

12. Dispositif de broyage secondaire (1) selon une des revendications 1 à 11, **caractérisé en ce qu'**entre les portions (15, 16 ; 25, 26) sont disposés des corps annulaires avec une surface périphérique (2) s'étendant parallèlement à l'axe de rotation (11, 21) du rouleau (10, 20).

13. Machine agricole de récolte pour traiter et transporter du produit de récolte (E), en particulier ensileuse automotrice (30), comprenant un dispositif de broyage secondaire (1) selon une des revendications précédentes disposé en aval d'un organe de traitement de produit récolté (31).
